# EUROPEAN PATENT APPLICATION

(11) **EP 1 847 516 A1**
(43) Date of publication of application: **24.10.2007**
(21) Application number: 05799105.1
(22) Date of filing: 16.09.2005
(51) Int. Cl.: C04B 9/02, C04B 18/24, C04B 38/08

(54) **METHOD OF OBTAINING POROUS MATERIALS THAT ARE AGGLOMERATED WITH PERICLASE CEMENT**

(30) Priority: 17.09.2004 ES 200402322
(71) Applicant: UNIVERSIDADE DE SANTIAGO DE COMPOSTELA, 15782 Santiago de Compostela (ES)
(72) Inventor: PEREIRO LÓPEZ, Gabriel, 15782 Santiago de Compostela (A Coruña) (ES); GUITIÁN RIVERA, Francisco, 15782 Santiago de Compostela (A Coruña) (ES)
(74) Representative: Carvajal y Urquijo, Isabel
(86) International application number: PCT/ES2005/000506
(87) International publication number: WO 2006/035091

(57) **Abstract**

This invention relates to a process of obtaining porous materials bonded with periclase cements and a disperse phase of plant origin, such as stems and leaves of various plants, nut shells, or a disperse phase of an inorganic origin, such as mollusk shells or expanded clay. The magnesium cement is initially prepared and the di-sperse phase is conditioned to be used in each case; then they are mixed, the mixture is homogenized, the mold is conditioned, it is pressed, left to set, demolded and left to dry at room temperature for at least 4 hours, obtaining porous boards or panels of different sizes and geometric shapes. They are applicable as sound absorbents, decorative elements, cladding and supports.

## Description

### Field of the Art

The process for obtaining porous materials uses plant fibers of stems, leaves,...of several plants; nut shells; mollusk shells; or expanded clay as a disperse phase. The porous materials obtained are applicable as sound absorbers, decorative elements, insulators, coatings and supports.

### State of the Art

Currently there are several processes for manufacturing porous materials such as light-weight wood wool building panels (WO94/04473) marketed in Spain by companies such as Heraklith^{®} or Maydisa; processes for manufacturing insulating boards (US5741379) or soundproofing panels (WO93/21369) using flax or sheep wool.

The obtaining process proposed in this invention consists of subjecting the plant fibers, nut shells, shells...to a mineralizing treatment which does not alter the mechanical properties of the disperse phase, annulling biological deterioration processes, making the disperse phase virtually inert and increasing their resistance to fire.

As the different disperse phases are coated with magnesium cement and caked together under pressure, they form a stable, resistant, compact and long-lasting structure while at the same time the honeycomb structure of the filler (disperse phase) give the obtained board: insulation, light weight and elasticity. The resulting panel or board can be used in any type of interior applications: suspended ceilings, insulation between adjacent rooms and between floors, thermal bridge insulation, etc.

The process has several advantages compared to the already existing processes. One of the most significant differences is the type of disperse phases used: plant fibers (from stems, leaves, roots,... of different plants), nut shells; mollusk shells and expanded clay for the manufacture of porous composite materials with periclase. This type of disperse phases allows obtaining boards with an eye-catching and innovative appearance.

Manufactured boards or panels achieve improving in at least some frequency bands the sound characteristic of already marketed and wide-spread products. The environmental value must also be pointed out because the occurrence of slash (due to the accumulation of biodegradable pollutants), the cutting of trees required in other processes, the added value of different residues increases, sustainable development is enhanced and the reduction of sound pollution is sought with the finally obtained products.

Other relevant features are the raw materials used as a disperse phase, specifically, the abundance of raw materials in the surrounding ecosystem, the minimum cost thereof (because most of them are residues or by-products) and the fact that they need hardly any treatments prior to being used in the proposed process.

### RAW MATERIALS

Periclase cement is the inorganic bonding agent used for manufacturing these types of materials. It is magnesium cement obtained by heterogeneous reaction between magnesium oxide as the main component and magnesium chloride. Its main physicochemical properties are seen in Table 1.

**Table 1.- Characteristics of the periclase cement used.**

| **Property** | **Value** |
|---|---|
| - Real density | 2.04 g/cm³ |
| - Apparent density | 1.71 g/cm³ |
| - Specific surface | 13.03 g/cm³ |
| - Porosity | 16.18 g/cm³ |

Once the corresponding mineralogical study (by X-ray diffraction) and differential thermal analysis (DTA) and thermal gravimetric analysis (TGA) have been carried out, it can be concluded that the periclase cement used essentially consists of periclase, various magnesium oxychlorides and quartz (existing as an impurity in the original magnesite), have two clearly differentiated steps upon analyzing its behavior with temperature. Specifically, there is a first step (between 144°C and 233°C) in which water molecules are successively lost from crystallization; and a second step (between 350°C and 460°C) in which the decomposition of the cement can be observed, which can be noted due to the presence of several endothermic peaks. On average, the total weight loss reaches 42% of the analyzed sample, 14% thereof corresponding to the occluded water.

Different magnesium oxides obtained from burning magnesium carbonate (magnesites) are used as raw materials to manufacture the magnesium cement.

The specific surface of the samples can be used as a measurement of the reactivity of the magnesites in a heterogeneous reaction, such as setting. These values, determined by the gas adsorption BET method, as well as other physicochemical properties of interest regarding one of the magnesium oxides used, are shown in Table 2.

**Table 2.- Main physicochemical characteristics of one of the magnesium oxides used.**

| **Property** | **Value** |
|---|---|
| - Real density | 3.31 g/cm³ |
| - Specific surface | 17.56 m²/g |
| - 250-125 µm fraction | 1.20% |
| - 125-63 µm fraction | 6.46% |
| - < 63 µm fraction | 92.34% |
| - Mean diameter (D₅₀) | 4.79 µm |
| - Mean MgO composition | 83.5% |
| - Mean SiO₂ composition | 8.9% |
| - Mean CaO composition | 2.1% |

As regards the magnesium chloride, commercial magnesium chloride hexahydrates with a density of 1.57 g/cm³ and a purity of at least 99.0% are used.

On the other hand, as regards the disperse phase several variants have been used, obtaining different products (according to the type and amount of filler used), always seeking different packings.

Organic and inorganic fillers were used.
- Among the organic fillers, the following must be pointed out: plant fibers from straw or dried grass, gorse, ferns, pines and marine algae (comprising the following genres: *Lolium, Ulex*, *Pteridium, Pinus* and *Himanthalia*) and various nut shells (peanuts, sunflower seeds, pistachios, etc.).
- The following were used as inorganic fillers: mollusk shells (mussels, clams, oysters, etc.) and expanded clay.

One of the most significant physical characteristics is the apparent packing density (obtained by weighing of 1 liter) of the raw materials used as a disperse phase. Said property will be a determining factor in finding the optimal ratio (disperse phase/cement) because the larger the filler (less apparent density) the greater the amount of periclase cement needed to obtain the board with the suitable features. This can be seen in summarized form in Table 3.

**Table 3.- Optimal "disperse phase-cement" ratio used.**

| | **FILLER** | **PRODUCT** |
|---|---|---|
| | **Disperse phase apparent density (g/cm³)** | **% disperse phase in boards (% by weight)** |
| - Plant fibers⁽¹⁾: | 0.041-0.072 | **25-40%** |
| -Food and agricultural residues⁽²⁾: | 0.071-0.180 | **50%** |
| - Inorganic fillers⁽³⁾: | 0.702-0.723 | **65-75%** |

| | | |
|---|---|---|
| (1): Dried grass or straw (mainly *Lolium sp.*), soft gorse (*Ulex Europaeus*), an endemic plant in Galicia and Portugal, leaves of ferns (*Pteridium Aquilinum*), very widespread in the surrounding moist habitats, pine needles (*Pinus pinaster* or Maritime pine), and fibers obtained from marine algae specifically from *Himanthalia elongata*) were chosen among plant fibers mainly based on two reasons: the geometry and their abundance. By way of illustration, Figure 1 shows typical photographs of some of the resources used as a source of plant fibers. It specifically shows: the grass used (Figure 1.A), soft gorse (Figure 1.B), common fern (Figure 1.C) and pine needles (Figure 1.D). (2): Sunflower seed shells (from the food and agricultural and/or urban area) and peanut shells stand out among the food and agricultural residues, which are shown in photographs in Figure 2. Hazelnut and pistachio shells were the other shells used. (3): Finally, as regards the inorganic fillers, mollusk shells, such as mussel shells (Figure 3.A), and expanded clay (Figure 3.B) were used. | | |

Table 3 shows the optimal disperse phase percentages used, i.e. those providing the final material with a better appearance and sound characteristic; nevertheless it is important to stress that the disperse phase percentage that can be used is more ample. Specifically, between 20% and 50% by weight of disperse phase (if plant fibers are used), between 40% and 60% by weight (if nut shells are used) and between 50% and 85% by weight (if one of the inorganic fillers is chosen) can be used.

### EMBODIMENT

The porous materials obtained by using magnesium cements are manufactured by pressing, being presented in their final form as high porosity boards. The first step for obtaining them is to prepare the periclase cement that will act as a binder. To that end, the necessary magnesium oxide is mixed in solid state with the pre-established amount of magnesium chloride hexahydrate. Mixing them in solid state corresponds to the prior setting results in which it could be seen that previously mixing them in solid state rather than preparing the chloride solution and then adding the burned magnesites minimized setting time.

Then distilled water, which will act as a diluent, is added also in an accurate and predefined amount, and the mixture is stirred for several minutes so as to favor the complete dissolution of the small lumps that may exist. The reason that the amounts of chlorides, water and burned magnesites must be calculated previously is because the density of the preparation must be a preset value obtained experimentally (32.6°B⇒ρ = 1.29 g/cm³) so that the setting is the most optimal and the setting time is the lowest possible (about 4 hours).

On the other hand, the disperse phase is to be prepared by the drying thereof (provided it is needed). Likewise:
- the different plant fibers (from gorse, ferns, ...) are cut up such that all the fibers or filaments have a length of less than 3.0 cm. In the specific case of marine algae, dehydrated *Himanthalia elongata* is used.
- the nut shells are used without the seed as they came from the point of origin.
- the mollusk shells are subjected to a burning process (in those cases in which they contain adhered organic material remains) and are ground using the lower fraction of 1.0 cm in length.
- as regards the expanded clay, light weight sand of between 1.0 and 3.0 mm is chosen by sieving.

The organic fillers are divided into 2 or 3 equal parts such that they can be added to the cement in successive loads because the volume of the filler greatly exceeds that of the cement. For this reason the cement must be mixed with small additions of the organic filler until said filler has a uniform color, which represents a perfectly impregnated filler, and then adding (to the latter) the following portions of filler, operating in the same manner.

In the case of using some of the inorganic fillers indicated, the mixing can be carried out in a single addition.

Once the entire mixture is perfectly homogenized including 100% of the disperse phase, said mixture can be transferred to the corresponding mold. This mold must previously be conditioned with a fatty demolding agent prepared for that purpose (which will act as an interface and will facilitate demolding).

Once the mold has been filled with the entire prepared mixture, the filler is skimmed in its upper section and a plastic interface is placed to prevent the formed piece from adhering to the mold loading piston. At this point, the necessary pressure in each case is applied until obtaining the board with the desired conditions (thickness, porosity,...), and is left to harden in the mold at least 4 hours. Then it is demolded at a suitable rate, the plastic interface introduced is removed and is left to set for at least 4 hours at room temperature.

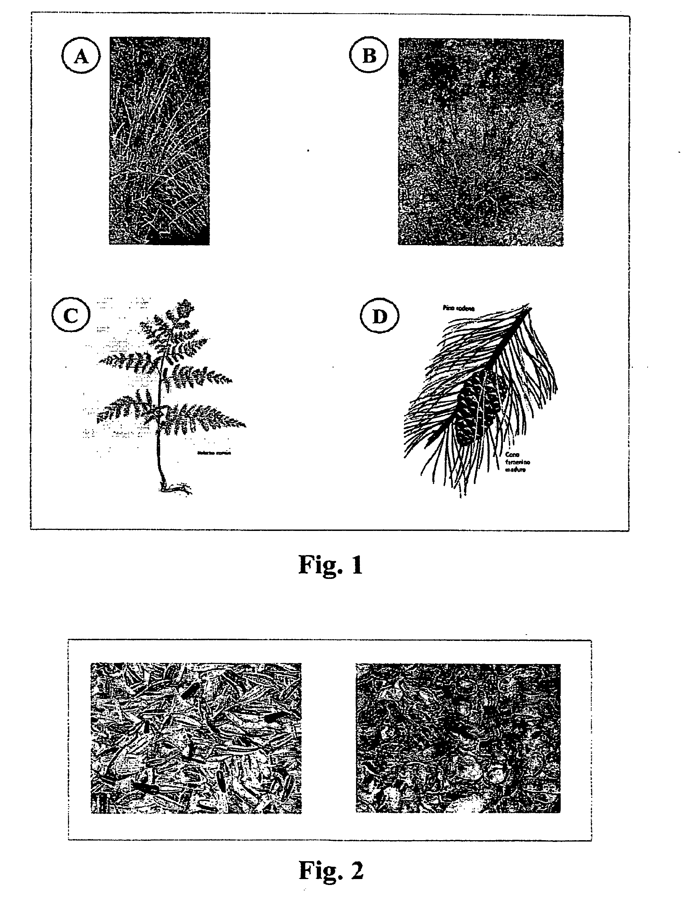

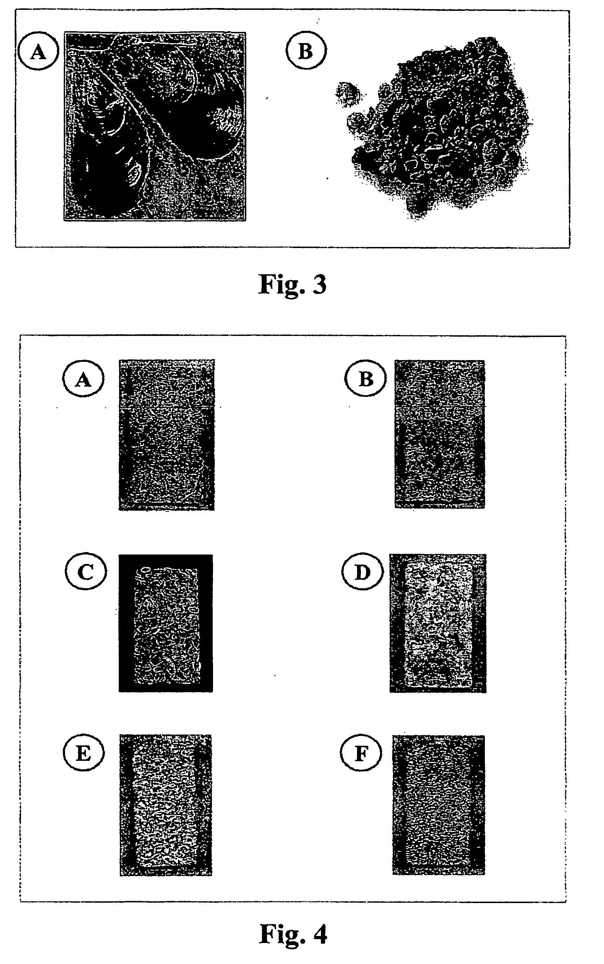

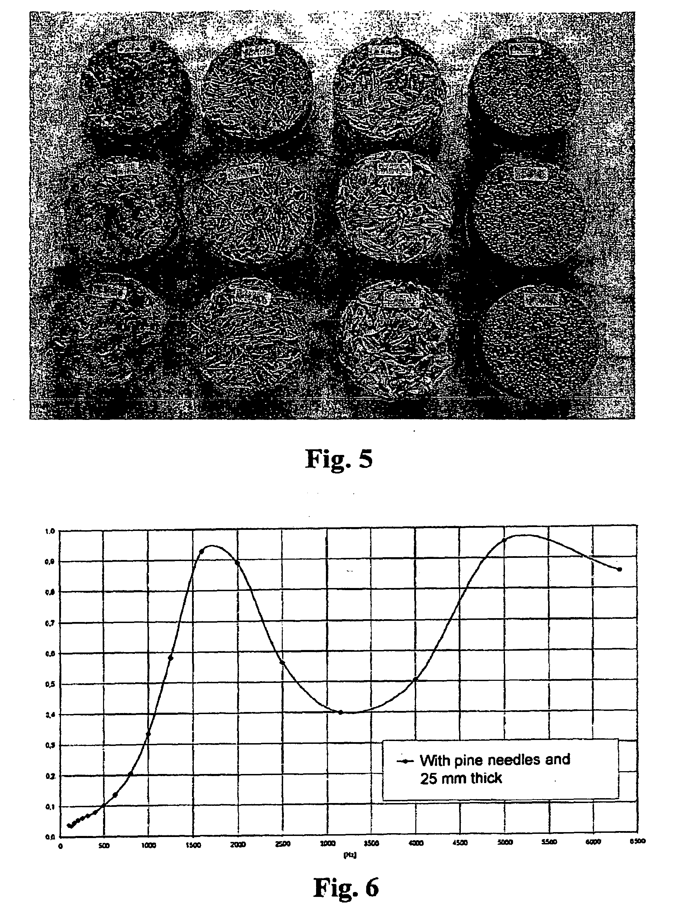

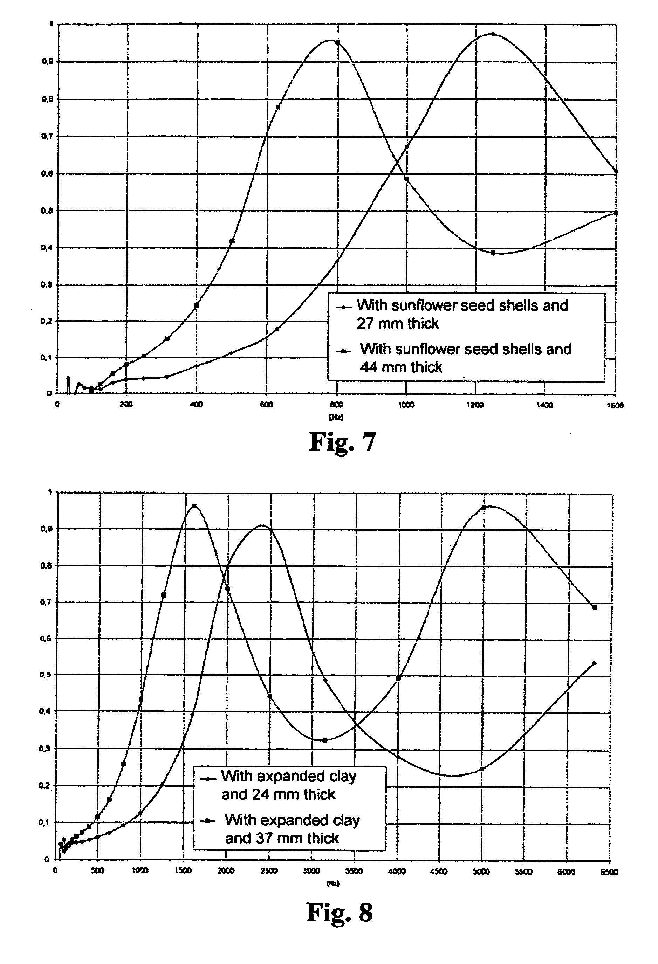

The pieces formed by this process (some examples of which can be seen in the photographs of Figure 4) need no thermal treatment because the test pieces are arranged for their use once the periclase cement has hardened, having good sound characteristics (given their high porosity) and a high resistance to fire which, in the event of having used an organic disperse phase, will be greater the greater the amount of magnesium cement used for the manufacture of the panel or board.

Figure 4 shows different porous materials obtained with periclase cement and using the following as a disperse phase: gorse (Figure 4.A), ferns (Figure 4.B), sunflower seed shells (Figure 4.C), peanut shells (Figure 4.D), mussel shells (Figure 4.E) and expanded clay (Figure 4.F).

### CHARACTERIZATION OF THE FINAL MATERIALS

The porous materials obtained have been characterized physically, mechanically, thermally and acoustically. All these determinations have been carried out from rectangular 7.5 cm x 15.0 cm test pieces of about 1.0 cm thick except in the case of sound tests, in which case cylindrical test pieces of 20 mm and 100 mm in diameter and with different thicknesses have been used. Figure 5 shows some of the cylindrical test pieces 100 mm in diameter used to carry out the sound tests. The different sound tests are carried out according to the UNE EN ISO 10534-2:2002 standard.

Combustion tests have also been carried out with a directional (ethanol) flame at 400°C so as to see at which point combustion of these materials occurs or not during 4 hours of testing.

By way of example, the process of obtaining and the main properties of porous materials obtained with periclase cements are mentioned below, the following are mentioned specifically: a porous material obtained with plant fibers, one obtained by using food and agricultural residues and two manufactured from inorganic disperse phases.

### EXAMPLE 1- Pine needle boards

The first step for obtaining a 7.5 x 15.0 x 1.5 cm³ pine needle board is to prepare the periclase cement which will be used as a bonding agent. To that end, 21.55 g of magnesium oxide and 13.00 g of magnesium chloride hexahydrate are mixed in solid state. The mixture of both solids is stirred until complete homogenization. 8.55 g of distilled water are added so after 3 or 4 minutes of gentle stirring, the periclase cement is obtained with the suitable fluidity.

On the other hand, the disperse phase is dried and 28.74 g of pine needles (which represents 40% by weight), cutting them up such that all the fibers or filaments have a length of less than 3.0 cm. The diverse phase is split into 2 or 3 equal parts, such that it can be added to the cement in successive loads because the volume of the filler greatly exceeds that of the cement.

Once the magnesium cement is prepared, small amounts of pine needles are added and it is stirred for at least 10 minutes until obtaining a uniform color in the organic filler, which represents perfectly impregnated filler. Then the following portions of filler or disperse phase are added (to the latter). Once the entire mixture is perfectly homogenized, including 100% of the disperse phase, said mixture can be transferred to the corresponding mold.

The mold must be previously treated with a fatty demolding agent prepared to that effect (which will act as an interface and will facilitate demolding). Once the mold is filled with the entire prepared mixture, the mixture is skimmed in its upper section and a plastic film is placed so as to prevent the formed piece from adhering to the mold loading piston.

The necessary pressure is applied until obtaining due to a height difference, a 1.5 cm thick board, and is left to harden in the mold at least 4 hours. Then it is demolded at a rate of 5 mm/min, the introduced plastic interface is removed and it is left to finish setting for at least 4 hours at room temperature.

As regards the physical and mechanical properties of this board, as with all materials obtained using plant fibers or nut shells, they are extremely light weight boards (apparent density always less than 0.40 g/cm³), high porosity (always greater than 75%) and an optimal 3-point bending resistance (according to UNE-EN ISO 10545-4:97). Some of these results are shown in Table 4.

**Table 4.- Physical and mechanical properties of porous materials manufactured with pine needles.**

| | |
|---|---|
| **- Type of cement** | Magnesium |
| **- Disperse phase** | Pine needles |
| **- Apparent density** | 0.39 g/cm³ |
| **- Real density** | 1.69 g/cm³ |
| **- Porosity** | 76.96% |
| **- Specific surface** | 3.84 m²/g |
| **- Water absorption** | 100% |
| **- Bending modulus** | 1.062 MPa |

To determine the thermal insulation capability of each and every one of the obtained magnesium boards, the fact that "the obtained materials are worked like wood" is taken advantage of, therefore the necessary test pieces (cylinders of a certain diameter) are obtained by sawing.

The test is carried out to see the transfer of heat from the prototype obtained with this material as an upper enclosure of a vertical furnace, commonly called an elevator furnace. This "cover" of insulating material (obtained by sawing from a rectangular test piece) is placed in position closing the hot chamber of the furnace on its upper part. The furnace was subjected for 4 hours to an internal temperature of 300°C (in some cases) and 150°C in others, the lower side of said test piece being at said temperature, and the temperature was measured with a type-K probe placed perpendicular to the non-exposed side. The tip of the contact probe is arranged perpendicular to the test piece and is connected to the corresponding digital thermometer, recording the temperature of the outer side at 2 minute intervals for the 5 hours that the test lasts.

For the case of the pine needle board, the generated thermal gradient is 93°C (15.2 mm thick at 150°C) and 141 °C (14.1 mm thick at 300°C). Said board likewise acts as a flame arrester for at least 150 minutes (in the event of being exposed to a 400°C flame for 4 hours).

Finally, the sound absorption determined for 25 mm thick test pieces at 760 mm Hg (± 1 mm Hg), 20.1°C (± 0.1 °C) and 88% (± 1 %) relative humidity is shown in the corresponding spectrum (Figure 6), in which the sound absorption coefficient is represented at a normal incidence against the frequency on the abscissa.

### EXAMPLE 2 Sunflower seed shell boards

The first step for obtaining a 7.5 x 15.0 x 1.8 cm³ board is to prepare the periclase cement that will be used as a bonding agent. To that end, 21.55 g of magnesium oxide and 13.00 g of magnesium chloride hexahydrate are mixed in solid state. The mixture of both solids is stirred until complete homogenization. 8.55 g of distilled water are added so after 3 or 4 minutes of gentle stirring, the periclase cement is obtained with the suitable fluidity.

On the other hand, 43.11 g of sunflower seed shells (50% by weight) are weighed. The disperse phase is split into 2 or 3 equal parts, such that it can be added to the cement in successive loads because the volume of the filler greatly exceeds that of the cement.

Once the magnesium cement is prepared, small amounts of seeds are added and it is stirred (for at least 10 minutes) until obtaining a uniform color in the organic filler. Then the following portions of disperse phase are added (to the latter). Once the entire mixture is perfectly homogenized, including 100% of the disperse phase, said mixture is transferred to the corresponding mold.

The mold must be previously treated with a fatty demolding which will act as an interface and will facilitate demolding. Once the mold is filled with the entire prepared mixture, the mixture is skimmed in its upper section and a plastic film is placed so as to prevent the formed piece from adhering to the mold loading piston.

The necessary pressure is applied until obtaining a 1.8 cm thick board and is left to harden in the mold at least 4 hours. Then it is demolded at a rate of 5 mm/min, the introduced plastic interface is removed and it is left to finish setting for at least 4 hours at room temperature.

Some properties of the porous boards obtained using sunflower seed shells are shown in Table 5. Said materials generate, with 17 mm of thickness, thermal gradients from 93°C and 149°C to 150°C and 300°C, respectively. Furthermore, and despite having 50% (by weight) more of organic filler than the previously described pine needle board, it also acts as a flame arrester for at least 150 minutes.

**Table 5.- Physical and mechanical properties of porous materials manufactured with sunflower seed shells.**

| | |
|---|---|
| **- Type of cement** | Magnesium |
| **- Disperse phase** | Sunflower seed shells |
| **- Apparent density** | 0.35 g/cm³ |
| **- Real density** | 1.68 g/cm³ |
| **- Porosity** | 79.19% |
| **- Specific surface** | 2.33 m²/g |
| **- Water absorption** | 103% |
| **- Bending modulus** | 0.869 MPa |

Figure 7 shows the influence of thickness of the board on the sound absorption coefficient of this type of porous materials. In this test, the meteorological conditions were as follows: 763 mm Hg; 20.0°C and 89% relative humidity, the sound absorption coefficient being shown in the figure at a normal incidence against the frequency in Hz.

### EXAMPLE 3- Expanded clay boards

The first step for obtaining a 7.5 × 15.0 × 1.5 cm³ board is to prepare the periclase cement that will be used as a bonding agent. To that end, 21.55 g of magnesium oxide and 13.00 g of magnesium chloride hexahydrate are mixed in solid state. The mixture of both solids is stirred until complete homogenization. 8.55 g of distilled water are added so after 3 or 4 minutes of gentle stirring, the periclase cement is obtained with the suitable fluidity.

On the other hand, 80.00 g of expanded clay (65% by weight) consisting of spheres with diameters comprised between 1.0 and 3.0 mm are prepared. To that end, the clay is passed through the corresponding sieve column, choosing said amount of the desired fraction.

The expanded clay spheres are added to the previously prepared magnesium cement and it is stirred until the spheres acquire the color of the cement impregnating them (which is achieved in about 5 minutes). Said mixture is transferred to the corresponding mold.

The mold must be previously treated with a fatty demolding which will act as an interface and will facilitate demolding. Once the mold is filled with the entire prepared mixture, the mixture is skimmed in its upper section and a plastic film is placed so as to prevent the formed piece from adhering to the mold loading piston.

The necessary pressure is applied until obtaining a 1.5 cm thick board and is left to harden in the mold at least 4 hours. Then it is demolded at a rate of 5 mm/min, the introduced plastic interface is removed and it is left to finish setting for at least 4 hours at room temperature.

Boards with inorganic fillers as the disperse phase are heavier and more rigid than those obtained from plant fibers or nut shells given the nature of the raw materials used in this case. They further have very little water absorption and are fireproof.

The properties of the porous materials manufactured from expanded clay can be seen in Table 6.

15 mm thick expanded clay boards generate thermal gradients from 84°C and 133°C to 150°C and 300°C, respectively.

Figure 8 shows the influence of the thickness of the expanded clay board on the sound absorption coefficient of this type of porous materials. Said determinations were carried out at 761 mm Hg, 20.2°C and 89% relative humidity. Said graph shows the sound absorption coefficient (at a normal incidence) in the ordinate and, the frequency in Hz in the abscissas.

**Table 6.- Physical and mechanical properties of porous materials manufactured with expanded clay.**

| | |
|---|---|
| **- Type of cement** | Magnesium |
| **- Disperse phase** | Expanded clay |
| **- Apparent density** | 0.68 g/cm³ |
| **- Real density** | 2.38 g/cm³ |
| **- Porosity** | 71.45% |
| **- Specific surface** | 6.48 m²/g |
| **- Water absorption** | 22% |
| **- Bending modulus** | 0.835 MPa |

### EXAMPLE 4- Mussel shell boards or panels

Finally, obtaining a magnesium board with mussel shells will be described below.

The first step for obtaining a 7.5 × 15.0 × 1.4 cm³ board is to prepare the periclase cement that will be used as a bonding agent. To that end, 21.55 g of magnesium oxide and 13.00 g of magnesium chloride hexahydrate are mixed in solid state. The mixture of both solids is stirred until complete homogenization. 8.55 g of distilled water are added so after 3 or 4 minutes of gentle stirring, the periclase cement is obtained with the suitable fluidity.

On the other hand, the mussel shells are subjected to 400°C for 1 hour for the purpose of removing all the residual organic material from the mussels and the resulting ashes are removed. The shells are ground and sieved through 1.0 cm, choosing the small fraction of said size for the purpose of having a more uniform filler.

129.20 g of mussel shell fragments of 1.0 cm in length (which constitutes 75% by weight of the final mixture) are weighed, the are added to the previously prepared magnesium cement and is stirred until they acquire the color of the cement impregnating them (which is achieved in about 5 minutes). Said mixture is transferred to the corresponding mold.

The mold must be previously treated with a fatty demolding which will act as an interface and will facilitate demolding. Once the mold is filled with the entire prepared mixture, the mixture is skimmed in its upper section and a plastic film is placed so as to prevent the formed piece from adhering to the mold loading piston.

The necessary pressure is applied until obtaining a 1.4 cm thick board and it is left to harden in the mold at least 4 hours. Then it is demolded at a rate of 5 mm/min, the introduced plastic interface is removed and it is left to finish setting for at least 4 hours at room temperature.

Some of the physical properties of the boards obtained from mussel shells can be seen in Table 7.

**Table 7.- Physical properties of porous materials manufactured from mussel shells.**

| | |
|---|---|
| **- Type of cement** | Magnesium |
| **- Disperse phase** | Mussel shells |
| **- Apparent density** | 1.06 g/cm³ |
| **- Real density** | 2.39 g/cm³ |
| **- Porosity** | 55.73% |
| **- Specific surface** | 8.60 m²/g |

## Claims

1. A process of obtaining porous materials bonded with periclase cements and using as a disperse phase plant fibers, nut shells, mollusk shells or expanded clay, **characterized in that** it comprises the following steps: synthesis of the periclase cement by mixing its constituents, conditioning the disperse phase to be used, mixing the disperse phase and periclase cement, homogenization, conditioning the mold, pressing, setting, demolding and drying at room temperature.

2. An obtainment process according to claim 1, wherein the synthesis of the periclase cement is **characterized in that** the periclase can be prepared by mixing and homogenizing magnesium oxide and magnesium chloride hexahydrate in solid state, homogenizing this mixture in solid state with the subsequent addition of water, obtaining a fluid homogenous mixture.

3. An obtainment process according to the previous claims, wherein the mixture of the periclase cement and disperse phase is **characterized by** the addition of the perfectly conditioned disperse phase to the previously prepared periclase cement and subsequent homogenization of the mixture.

4. An obtainment process according to the previous claims, **characterized by** the conditioning of the mold to be used with a fatty agent to which the previously homogenized mixture is added, and by the placement on the mixture of a plastic film.

5. An obtainment process according to the previous claims, **characterized in that** the mixture of the mold is pressed, the obtained board is kept in the mold for at least 4 hours, is demolded at a rate of 5 mm/min and is left to dry at room temperature for at least 4 hours.

6. An obtainment process according to claim 1, **characterized in that** the disperse phase consists of dried plant fibers from leaves, stems or branches of dried grass or straw, gorse, ferns, pines or marine algae, comprising genres such as the *Lolium, Ulex, Pteridium, Pinus* and *Himanthalia* type, with a fiber or filament length of less than 3.0 cm once fragmented and in which this phase of plant origin constitutes between 20% and 50% by weight of the prepared mixture.

7. An obtainment process according to claim 1, **characterized in that** the disperse phase consists of seedless nut shells, such as peanuts or sunflower seeds, in which the disperse phase constitutes between 40% and 60% by weight of the prepared mixture.

8. An obtainment process according to claim 1, **characterized in that** the disperse phase consists of expanded clay with spherical shape and a diameter between 1.0 mm and 3.0 mm, in which the disperse phase constitutes between 50% and 85% by weight of the prepared mixture.

9. An obtainment process according to claim 1, **characterized in that** the disperse phase consists of mollusk shells, comprising shells of the type of mussel, oyster or clam shells, pre-burned or not and ground to fragments of less than 1.0 cm in length and the disperse phase representing between 50% and 85% by weight of the prepared mixture.

10. An obtainment process according to the previous claims, **characterized in that** the obtained materials are applicable as sound absorbents, cladding, insulators, decorative elements or a support in any industrial field.
